# EUROPÄISCHE PATENTSCHRIFT

(11) **EP 2 167 796 B1**
(45) Veröffentlichungstag und Bekanntmachung des Hinweises auf die Patenterteilung: **30.05.2012**
(21) Anmeldenummer: 08785021.0
(22) Anmeldetag: 10.07.2008
(51) Int. Cl.: F01N 1/06, G10K 11/178

(54) **VORRICHTUNG UND VERFAHREN ZUR VERBESSERUNG DER DÄMPFUNG VON AKUSTISCHEN WELLEN**
APPARATUS AND METHOD FOR IMPROVING THE DAMPING OF ACOUSTIC WAVES
DISPOSITIF ET PROCÉDÉ D'AMÉLIORATION DE L'ATTÉNUATION D'ONDES ACOUSTIQUES

(30) Priorität: 11.07.2007 DE 102007032600
(43) Veröffentlichungstag der Anmeldung: 31.03.2010
(73) Patentinhaber: Deutsches Zentrum für Luft- und Raumfahrt e.V., 51147 Köln (DE)
(72) Erfinder: BUSSE, Stefan, 14052 Berlin (DE); HEUWINKEL, Claus, 10115 Berlin (DE); ENGHARDT, Lars, 10711 Berlin (DE); RÖHLE, Ingo, 10119 Berlin (DE)
(74) Vertreter: Patentanwälte Bressel und Partner
(86) Internationale Anmeldenummer: PCT/EP2008/006068
(87) Internationale Veröffentlichungsnummer: WO 2009/007138

(56) Entgegenhaltungen:
- EP-A- 0 916 817
- EP-A- 1 050 713
- EP-A- 1 801 500
- DE-A1- 19 528 570
- DE-A1- 19 861 018
- DE-C1- 10 103 942
- US-A- 6 160 892
- LAHIRI C. ET AL: 'Excitation of a Zero Mass Flow Liner for Acoustic Damping' AIAA JOURNAL Bd. 49, Nr. 3, März 2011, DOI:10.2514/1.J050421, Seiten 513 - 519
- BECHERT D.W.: 'Sound absorption caused by vorticity shedding, demonstrated with a jet flow' JOURNAL OF SOUND AND VIBRATION Bd. 70, Nr. 3, 08 Juni 1980, Seiten 389 - 405

## Beschreibung

Die Erfindung betrifft ein Verfahren und eine Vorrichtung zur Dämpfung von zu dämpfenden akustischen Wellen in einem in einem Volumen befindlichen Fluid. Insbesondere betrifft die Erfindung eine Dämpfung mit einer Vorrichtung, die einen von Begrenzungsflächen umschlossenen Hohlraum umfasst, wobei mindestens eine der Begrenzungsflächen fluiddurchlässig ist, um einen Fluidaustausch mit dem Volumen zu ermöglichen.

Akustische Wellen, d.h. Schallwellen, treten an vielen Stellen in der Umwelt auf. Materialien und Strukturen zur akustischen Dämpfung, die eine Fähigkeit aufweisen, akustische Wellen durch Energiedissipation abzuschwächen, werden zum einen benötigt, um Schallausbreitung im Sinne des Lärmschutzes einzudämmen und werden zum andern benötigt, um eine Schallausbreitung in technischen Systemen zu vermindern. Letzteres kann z.B. für messtechnische Anwendungen wichtig sein, um beispielsweise einen so genannten reflexionsarmen Raum zu erzeugen oder um unerwünschte technische Phänomene zu unterdrücken, die auf einer akustischen Druckschwankung beruhen. Ein sehr wichtiges Beispiel für die letztgenannten Phänomene sind thermoakustische Schwingungen in Brennkammern, insbesondere in Brennkammern von Turbomaschinen, wie beispielsweise Strahltriebwerken oder Gasturbinen.

In vielen Anwendungsbereichen werden perforierte Oberflächenverkleidungen zur Dämpfung von akustischen Wellen eingesetzt. Sie sind zumeist als doppelwandige flache Strukturen ausgeführt, wobei eine Wand mit Löchern versehen ist. Diese Löcher münden in einen zwischen den beiden Wänden liegenden Hohlraum oder in einer Vielzahl von kleinen Hohlräumen, wenn sich zwischen den Wänden eine wabenartige Struktur befindet. Auf der belochten Seite vermag diese Anordnung akustische Wellen, d.h. Schallfelder, abzuschwächen.

Bei Vorrichtungen zur Schalldämpfung, die in Gebäuden eingebaut oder in Lärmschutzwänden verwendet werden, befindet sich häufig anstelle der bienenwabenartigen Struktur ein akustisches Dämmmaterial. Auch in Fantriebwerken oder stationären Gasturbinen werden derartige Vorrichtungen zur Schalldämpfung eingesetzt und dort in der Regel als "Liner" bezeichnet. Liner gibt es in verschiedenen Ausführungsformen. Sie werden z.B. in Brennkammern vor oder im Einlauf oder Bypass von Triebwerken zur akustischen Dämpfung eingesetzt.

Insbesondere die durch einen Rückkopplungsmechanismus von Verbrennungsinstabilitäten mit akustischen Resonanzen verursachten sehr starken Verbrennungsschwingungen, welches meist Stehwellenfelder sind, treten häufig bei so genannten Low-NOₓ-Brennem, die für eine niedrige Emission von Stickoxiden optimiert sind, auf. Aufgrund der hohen Wiederholraten der akustischen Zyklen kommt es dabei bei einer strömungs- oder verbrennungsinduzierten Anregung des Systems in der Nähe einer Eigenfrequenz der Brennkammer zu einer angeregten Resonanz in der Brennkammer. Charakteristisch für sich in räumlich begrenzten Brennkammern ausbildende Stehwellenfelder sind sehr starke Druckschwankungsamplituden z.B. am Brennkammerabschluss oder am Turbineneinlauf. Die hierbei auftretenden Belastungen an der Brennkammerwand können bei unzureichender Dämpfung zu einer Verformung der Brennkammerwand oder im ungünstigsten Fall zu einer Zerstörung der Brennkammer führen.

Aus der EP 0 702 141 A2 ist beispielsweise eine Wandanordnung für eine Abgasdüse einer Überschallstrahlturbine beschrieben, bei der ein schallabsorbierendes Element, welches aus einer porösen Platte und einer Honigwabenstruktur oder einer porösen Platte und einem Toruskem besteht, zwischen einer Düsenplatte und einer Auskleidung angeordnet ist. Kühlende Luft wird veranlasst, entlang einer inneren Oberfläche der Düsenplatte zu strömen und durch Löcher der porösen Platte gegen die Auskleidung zu strömen.

Aus der EP 1 762 786 A1 ist ein Verfahren zur Dämpfung thermo-akustischer Schwingungen mittels eines Resonators, der ein Resonatorvolumen aufweist, bekannt, wobei in einem zu thermoakustischen Schwingungen neigenden Hohlraum thermoakustische Schwingungen induziert werden und zumindest ein Teil der thermoakustischen Schwingungen aus dem Hohlraum ausgekoppelt und in das Resonatorvolumen eingekoppelt werden, wobei in dem Resonatorvolumen Dämpfungsschwingungen erzeugt werden, die auf die thermoakustischen Schwingungen abgestimmt werden, wobei zumindest ein Teil der Dämpfungsschwingungen in den Hohlraum derart eingekoppelt wird, dass sich die Dämpfungsschwingungen und die thermoakustischen Schwingungen in einem Überlappungsbereich überlappen und wobei sich die Schwingungen zumindest im Überlappungsbereich weitgehend auslöschen. Ferner ist eine Vorrichtung zur Dämpfung thermoakustischer Schwingungen in dem schwingungsfähigen Hohlraum beschrieben, die einen Resonator mit einem Resonatorvolumen und einen Hohlraum umfasst, so dass der Hohlraum über eine Auskoppelleitung mit dem Resonatorvolumen verbunden ist und bei der die Auskoppelleitung eine Einstelleinrichtung aufweist, mittels derer eine thermoakustische Schwingung in der Auskoppelleitung beeinflussbar ist und bei der ein weiteres Resonatorrohr das Resonatorvolumen mit dem Hohlraum verbindet. Bei dem Hohlraum handelt es sich vorzugsweise um eine Brennkammer, insbesondere die einer Gasturbine. Bei dem Resonator handelt es sich um einen so genannten Helmholtz-Resonator. Dieser zeichnet sich dadurch aus, dass die darin resonant angeregten Schwingungen durch die Schallwellen, die in dem zu dämpfenden Volumen erzeugt werden, angeregt bzw. erzeugt werden. Auch wenn bei der beschriebenen Vorrichtung über die Einstelleinrichtung durch eine Längenverstellung der Auskoppelleitung eine Resonanzfrequenz der Dämpfungsschwingungen beeinflussbar ist, kann ein solcher Helmholtz-Resonator nur akustische Schwingungen in einem sehr engen Frequenzband um die jeweilige Resonanzfrequenz des Resonators abschwächen.

Aus der nicht offengelegten Patentanmeldung DE 10 2005 059 184 ist eine Vorrichtung zur Dämpfung thermoakustischer Resonanzen in Brennkammern bekannt, die eine Brennkammer umfasst, wobei mindestens ein zumindest teilweise hohlzylindrisches, mit der Brennkammer koaxiales Eindüselement vorgesehen ist, welches eine Mehrzahl zueinander beabstandeter Düsenöffnungen aufweist, und durch die Düsenöffnungen ein Fluid zur Dissipation von während des Brennvorgangs auftretender Schwingungsenergie als Freistrahl zumindest mit einer radialen Komponente in die Brennkammer einströmt. In der DE 10 2005 059 184 ist somit beschrieben, dass sich eine Dämpfung der Schwingungen erreichen lässt, wenn ein teilweise hohlzylindrisch ausgebildetes Element, welches die zylindrische Brennkammer umgibt, an einer Grenzfläche zur Brennkammer Düsenöffnungen aufweist, durch die ein Fluid eingeströmt wird. Um diesen Effekt zu nutzen, muss aber ein Teil des Fluids, welches durch die Turbomaschine verdichtet wurde, verwendet werden und steht somit für andere Prozesse, wie eine Verbrennung oder zur Steigerung eines Schubs, nicht mehr zur Verfügung. Mit dem dort beschriebenen Verfahren ist daher immer ein gewisser, nicht zu vernachlässigender Energieverlust verbunden. Das Verfahren mindert somit den Wirkungsgrad der Maschine in einem spürbaren Maß.

Aus dem Stand der Technik sind Systeme bekannt, welche eine geregelte Schallerzeugung abhängig von mindestens einem Sensorsignal vorsehen, welches von dem zu bedämpfenden Schall abhängig ist. Solche Systeme sind beispielsweise in der EP 0 916 817 A2, US 6,160,892 A1, EP 1 050 713 A1 oder DE 198 61 018 A1 beschrieben.

Auch bei sonstigen Anwendungen im Bereich des Lärmschutzes im Außenbereich und in Gebäuden ist eine akustische Dämpfung bisher nicht hinreichend gut gelöst. Eine Akzeptanz für primär Lärm erzeugende Techniken und Technologien in der Bevölkerung kann nur gesteigert werden, wenn eine Lärmausbreitung durch verbesserte Verfahren und Vorrichtung zur Dämpfung eingegrenzt werden kann.

Der vorliegenden Erfindung liegt daher das technische Problem zugrunde, eine verbesserte Vorrichtung und ein verbessertes Verfahren zur Dämpfung von akustischen Wellen, insbesondere zur Dämpfung thermoakustischer Resonanzen in Triebwerken, zu schaffen.

Die Lösung des technischen Problems ergibt sich erfindungsgemäß durch die Gegenstände der Ansprüche 1 und 9. Weitere vorteilhafte Ausgestaltungen der Erfindung ergeben sich aus den Unteransprüchen.

Die Erfindung beruht auf der Erkenntnis, dass eine doppelwandig ausgebildete Struktur, von denen eine Wand fluiddurchlässig ausgestaltet ist, beispielsweise eine Belochung aufweist, in einem an die fluiddurchlässige Wand angrenzenden Volumen eine nennenswerte Dämpfung akustischer Wellen bewirken kann, wenn in einem Hohlraum der doppelwandigen Struktur aktiv akustische Schwingungen bzw. Wellen angeregt werden. Hierbei erstreckt sich die Dämpfung nicht nur auf den Frequenzbereich der in dem Hohlraum angeregten akustischen Schwingungen (aktiv angeregten akustischen Wellen), sondern über einen breiten Frequenzbereich. Hierbei erfolgt die Anregung unabhängig von der exakten Frequenz oder Phase des zu bedämpfenden akustischen Wellen bzw. des Schalls. Der Effekt beruht nicht auf einer gezielten Auslösung durch gegenphasige Schallsignale. Insbesondere wird eine Vorrichtung zur Dämpfung von zu dämpfenden akustischen Wellen in einem in einem Volumen befindlichen Fluid, umfassend einen von Begrenzungsflächen umschlossenen Hohlraum, vorgeschlagen, wobei mindestens eine der Begrenzungsflächen fluiddurchlässig ist, um einen Fluidaustausch mit dem Volumen zu ermöglichen, wobei mindestens ein Schallerzeuger in oder an dem Hohlraum angeordnet ist, um in dem in dem Hohlraum befindlichen Fluid aktiv angeregte akustische Wellen anzuregen, so dass eine Dämpfung der akustischen Wellen in dem Volumen eintritt. Die angeregten akustischen Wellen sind hinsichtlich ihrer Phase und Frequenz nicht unmittelbar, insbesondere nicht über einen Regelkreis, von den zu bedämpfenden akustischen Wellen abhängig. Bei einem Verfahren zum Dämpfen von zu dämpfenden akustischen Wellen in einem in einem Volumen befindlichen Fluid mittels einer Dämpfungsvorrichtung, die einen von Begrenzungsflächen umschlossenen Hohlraum umfasst, wobei eine der Begrenzungsflächen fluiddurchlässig ist, um einen Fluidaustausch mit dem Volumen zu ermöglichen, werden mittels eines Schallerzeugers in dem in dem Hohlraum befindlichen Fluid aktiv angeregte akustische Wellen erzeugt bzw. angeregt, so dass eine Dämpfung der zu dämpfenden akustischen Wellen in dem Volumen eintritt. Die aktiv angeregten akustischen Wellen können vorzugsweise angepasst an den Hohlraum, jedoch unabhängig von den zu bedämpfenden akustischen Wellen in dem Volumen gewählt werden. Die aktiv angeregten akustischen Wellen sind erfindungsgemäß frequenz- und phasenunabhängig von den zu bedämpfenden akustischen Wellen. Frequenzunabhängig und phasenunabhängig heißt in diesem Zusammenhang, dass keine exakte Frequenzkopplung oder Phasenkopplung zu einer Frequenz oder Phase der zu bedämpfenden Wellen vorliegt. Die zur Erzeugung der aktiv angeregten akustischen Wellen notwendige Energie ist in der Regel sehr gering. Bei einem Einsatz in einer Gasturbine oder einem Flugzeugtriebwerk ist die benötigte Energie zur Erzeugung der aktiv angeregten akustischen Wellen vernachlässigbar gegenüber der für den Antrieb zur Verfügung stehenden Energie.

Die Vorrichtung zur Dämpfung ist vorzugsweise so angeordnet, dass die fluiddurchlässige Begrenzungsfläche eine Grenzfläche des Volumens ist. Hierdurch wird eine unmittelbare Dämpfung der zu dämpfenden akustischen Wellen in dem Volumen mittels der Vorrichtung möglich.

Die fluiddurchlässige Begrenzungsfläche ist eine materielle Struktur, die Aussparungen, Löcher oder Ähnliches aufweist, um einen Durchtritt von Fluid durch die materielle Struktur zu gestatten. Die materielle Struktur kann auch ein poröses, durchlässiges Material sein.

Ein Einsatz der erfindungsgemäßen Vorrichtung ist nicht nur in Strahltriebwerken oder Gasturbinen, sondern auch innerhalb und außerhalb von Gebäuden zur Dämpfung von Schallwellen, d.h. akustischen Wellen jeglicher Art, geeignet.

Die aktiv angeregten akustischen Wellen werden vorzugsweise monofrequent erzeugt oder angeregt. D.h. eine Anregungswellenform, beispielsweise eine Sinuswelle, wird mit einer regelmäßigen zeitlichen Abfolge erzeugt und/oder angeregt. Hierbei wird die Frequenz bevorzugt angepasst an eine geometrische Form des Hohlraums gewählt. Die Wahl ist weitestgehend unabhängig von dem Frequenzspektrum der zu bedämpfenden Schallwellen in dem Volumen. Vorzugsweise weicht die gewählte Frequenz der aktiv angeregten, vorzugsweise monofrequenten akustischen Wellen von einer Frequenz ab, bei der ein maximaler Schalldruckpegel im Frequenzspektrum der zu bedämpfenden akustischen Wellen auftritt.

Als Schallerzeuger können ein oder mehrere elektrisch angetriebene Schallerzeugungselemente verwendet werden. Eine bevorzugte Ausführungsform der Erfindung sieht daher vor, dass der Schallerzeuger ein elektrisch angetriebenes Schallerzeugungselement umfasst, insbesondere einen Lautsprecher, einen Ultraschallwandler und/oder ein Piezoelement. Alle diese aufgezählten Vorrichtungen sind in der Lage, elektrische Energie in akustische Wellen in einem Fluid umzusetzen bzw. akustische Wellen in einem Fluid anzuregen. Ein Schallerzeuger, der ein elektrisch angetriebenes Schallerzeugungselement umfasst, bietet den Vorteil, dass die Schallerzeugung auf einfache Weise ausgeführt werden kann. Die jeweils gewünschte Frequenz kann über große Frequenzbereiche variiert werden. Ein Lautsprecher kann beispielsweise akustische Wellen zumindest im gesamten hörbaren Frequenzbereich anregen. Zum Speisen dieser Schallerzeugungselemente benötigte elektrische Signale können auf einfache Weise mittels elektronischer Schaltungen erzeugt und gegebenenfalls verstärkt werden.

An Stellen, an denen eine Fluidströmung auftritt, kann jedoch auch die Fluidströmung verwendet werden, um aktiv akustische Schallwellen anzuregen. In einer Gasturbine oder insbesondere in einem Fantriebwerk für ein Flugzeug kann beispielsweise eine in einem Bypass strömende Fluidströmung ganz oder teilweise dazu verwendet werden, aktiv akustische Wellen in dem Hohlraum anzuregen. Bei einer bevorzugten Ausführungsform umfasst der mindestens eine Schallerzeuger daher (alternativ oder zusätzlich zu einem beispielsweise elektrisch angetriebenen Schallerzeugungselement) ein aerophones Schallerzeugungselement, insbesondere eine oder mehrere schwingungsfähige Zungen oder ein einen Schall erzeugenden Fluidstrom teilendes Element. Als aerophone Schallerzeugungselemente werden alle solche Schallerzeugungselemente bezeichnet, deren Schallerzeugungsmechanismus durch eine Fluidströmung, insbesondere eine gasförmige Strömung, erzeugt wird. Aus dem Stand der Technik sind vielfältige Möglichkeiten bekannt, durch eine Fluidströmung Schallwellen zu erzeugen. Hierbei werden unterschiedliche Mechanismen genutzt. Einer dieser Mechanismen beruht darauf, dass die Strömung periodisch unterbrochen wird. Dies kann beispielsweise durch eine oder mehrere schwingfähige Zungen oder andere schwingfähige Elemente verursacht sein. Ein anderer Schallerzeugungsmechanismus beruht darauf, dass eine Strömung unterteilt wird, die ein teilendes Element überströmt. An dem die Strömung teilenden Element löst sich die Strömung ab, wodurch akustische Wellen angeregt werden. Bei solchen Ausführungsformen, bei denen die aktiv angeregten akustischen Wellen mittels einer ohnehin existierenden Fluidströmung angeregt werden, ist ein benötigter Energieaufwand zur Erzeugung der angeregten akustischen Wellen besonders gering.

Bei aerophon erzeugten aktiv angeregten akustischen Wellen kann bei einer Anordnung des schallerzeugenden Elements in oder an dem Hohlraum in der Regel erreicht werden, dass in dem Hohlraum eine Hohlraumresonanz angeregt wird, die wiederum auf einen instationären Ablöseprozess an dem aerophonen Schallerzeugungselement eine Rückkopplung bewirkt, die zu einer Ausbildung der Hohlraumresonanz als stationärem bzw. kontinuierlichem Zustand führt. Eine Anregung von akustischen Wellen, die eine Hohlraumresonanz in dem Hohlraum anregen, hat sich als besonders vorteilhaft erwiesen, da hierdurch eine besonders hohe Dämpfung der akustischen Wellen in dem Volumen erreicht wird. Dieses gilt nicht nur für akustische Wellen, die eine Frequenz aufweisen, die der Resonanzfrequenz der Hohlraumresonanz entspricht, sondern für akustische Wellen in einem breiten Frequenzbereich. Ebenso ist es vorteilhaft, dass bezogen auf die zur Anregung benötigte Energie bei einer Anregung einer Hohlraumresonanz ein besonders hoher Schallpegel der aktiv angeregten akustischen Wellen in dem Hohlraum erreicht werden kann. Die Hohlraumresonanz oder Hohlresonanzen sind von den geometrischen Gegebenheiten des Hohlraums abhängig. Diese Gegebenheiten können sich beispielsweise bei einer Erwärmung des Fluids und/oder der Wände oder Begrenzungsflächen ändern. Um somit auch bei Ausführungsformen, die ein elektrisch angetriebenes Schallerzeugungselement verwenden, eine Hohlraumresonanz in dem Hohlraum anregen zu können und aufrecht zu erhalten, ist bei einer bevorzugten Ausführungsform vorgesehen, dass der mindestens eine Schallerzeuger mit einer Steuereinheit verknüpft ist und mit der Steuereinheit mindestens ein Schallsensor zum Erfassen von akustischen Wellen verbunden ist und die Steuereinheit den mindestens einen Schallerzeuger in Abhängigkeit der Messsignale des mindestens einen Schallsensors steuert, um eine Hohlraumresonanz oder eine vorgegebene Frequenz anzuregen. Bevorzugt ist der mindestens Schallsensor in dem Hohlraum angeordnet und die Steuereinheit ausgebildet, mittels der aktiv angeregten akustischen Wellen eine Hohlraumresonanz anzuregen.

Um insbesondere eine Kühlung der fluiddurchlässigen Begrenzungsfläche zu ermöglichen, wenn diese als Grenzfläche eines Brennkammervolumens eingesetzt wird, in dem die akustischen Wellen gedämpft werden sollen, ist es von Vorteil, wenn der Hohlraum mindestens eine Einlassöffnung umfasst, um ein Einleiten von Fluid über die Einlassöffnung in den Hohlraum und ein Ausströmen des Fluids durch die fluiddurchlässige Begrenzungsfläche zu ermöglichen.

Bei einer Ausführungsform ist vorgesehen, dass der Hohlraum mittels mindestens einer weiteren fluiddurchlässigen Wand in mindestens zwei Teilhohlräume unterteilt ist, wobei die aktiv angeregten akustischen Wellen zumindest in einem der zwei Teilhohlräume erzeugt werden. Die Unterteilung in Teilhohlräume erfolgt so, dass die fluiddurchlässige Begrenzungsfläche und die mindestens eine weitere fluiddurchlässige Wand im Wesentlichen zueinander parallel sind. Im Wesentlichen parallel soll in diesem Zusammenhang ausdrücken, dass eine ins Innere des Hohlraums weisende Flächennormale der fluiddurchlässigen Begrenzungsfläche an nahezu jedem Ort der fluiddurchlässigen Begrenzungsfläche die mindestens eine weitere fluiddurchlässige Begrenzungsfläche unter einem Winkel von 90° oder nahe 90° schneidet. Ist die fluiddurchlässige Begrenzungsfläche ein Rotationskörper bezüglich einer Achse oder ein Teil hiervon, so wird die mindestens eine fluiddurchlässige Wand ebenfalls ein Rotationskörper bezüglich derselben Rotationsachse bzw. ein Teil eines Rotationskörpers sein.

Bei einer Weiterbildung der Erfindung ist vorgesehen, dass mindestens ein weiterer Schallerzeuger an oder in einem der mindestens zwei Teilhohlräume angeordnet ist, so dass in den mindestens zwei Teilhohlräumen unterschiedliche oder gleichartig aktiv angeregte akustische Wellen erzeugbar sind. Hierdurch können unterschiedliche Hohlraumresonanzen angeregt werden, die nicht zueinander "harmonisch" sein müssen, da die Teilhohlräume unterschiedliche Abmessungen aufweisen können.

Bei der bevorzugten Ausführungsform der Erfindung ist das Volumen im Wesentlichen rotationssymmetrisch und entlang einer Symmetrieachse ausgedehnt und ist das Fluid entlang einer Hauptströmungsrichtung von einem Fluid durchströmbar, wobei die Hauptströmungsrichtung im Wesentlichen parallel zur Symmetrieachsenrichtung ist, und der Hohlraum das Volumen zumindest in einem Radialsektor radial mittels der fluiddurchlässigen Begrenzungsfläche begrenzt, wobei der Schallerzeuger in oder an dem Hohlraum am stromaufwärts oder stromabwärts gelegenen Ende des Hohlraums angeordnet ist. Eine solche Anordnung ist besonders geeignet, um eine Brennkammer an einer Gasturbine oder an einem Triebwerk für ein Flugzeug zu dämpfen.

Bei einer bevorzugten Weiterbildung ist vorgesehen, dass die fluiddurchlässige Begrenzungsfläche auf einem senkrecht zur Symmetrieachse ausgerichteten Kreis oder Kreisbogen angeordnete Öffnungen, vorzugsweise kreisförmige Öffnungen, umfasst. Bei einer Anordnung zur akustischen Dämpfung von akustischen Wellen in einem Triebwerk oder einer Gasturbine ist die Vorrichtung vorzugsweise als hohler Rotationskörper, beispielsweise hohlzylindrisch, ausgebildet, wobei die Öffnungen auf einem Ring angeordnet sind, wobei der Ring vorzugsweise an einer Stelle eines Druckbauchs und der Hohlraumresonanz angeordnet ist. Ist in den Hohlraum beispielsweise ein "λ / 2-Stehwellenfeld" ausgebildet, bei dem ein Abstand L zwischen dem stromaufwärtigen Ende und dem stromabwärtigen Ende des Hohlraums einer Hälfte der Wellenlänge λ der Hohlraumresonanz entspricht (λ / 2 = L), befindet sich der Druckbauch mittig zwischen dem stromaufwärtigen und stromabwärtigen Ende des Hohlraums. Durch eine geeignete Anordnung des Schallerzeugers bzw. der Schallerzeugungselemente an dem stromaufwärtigen oder stromabwärtigen Ende des Hohlraums oder auch an einem anderen Ort, beispielsweise einer anderen Begrenzungsfläche, kann erreicht werden, dass sich ein resonantes Stehwellenfeld in dem Hohlraum beispielsweise zwischen dem stromaufwärtigen und dem stromabwärtigen Ende des Hohlraums, d.h. in Axialrichtung, ausbildet.

Um aktiv angeregte akustische Wellen in dem Hohlraum oder einem der Teilhohlräume, die in einer größeren Anzahl als zwei auftreten können, anzuregen, können in dem Hohlraum oder dem entsprechenden Teilhohlraum mehrere Schallerzeugungselemente oder sogar mehrere Schallerzeuger angeordnet sein. Diese werden vorzugsweise so angeordnet, dass eine Hohlraumresonanz, die bekanntlich unterschiedliche Ausprägungen annehmen kann, optimal angeregt werden kann. Bei einem Hohlraum, der im Innern eines doppelwandigen Zylinders ausgebildet ist und für ein Dämpfen von zu dämpfenden akustischen Wellen in einem von dem Zylinder umschlossenen Volumen vorgesehen ist, werden vorzugsweise an den Stirnseiten oder anderen Begrenzungsflächen des Hohlraums mehrere Schallerzeugungselemente (beispielsweise Lautsprecher) eines oder mehrerer Schallerzeuger angeordnet sein, um zwischen den Mantelflächen des Hohlraums aktiv angeregte akustische Wellen anzuregen oder zu erzeugen.

Insbesondere wenn eine Ausdehnung des Hohlraums entlang der fluiddurchlässigen Begrenzungsflächen größer als senkrecht zu dieser ist (beispielsweise bei einem in einem doppelwandigen Hohlzylinder ausgebildeten Hohlraum eine Ausdehnung entlang der Zylinderachse größer als eine radiale Ausdehnung des Hohlraums ist), so können die Stirnseiten des Hohlraums ganz oder teilweise fehlen, sofern eine ausreichende Anregung von aktiv angeregten akustischen Wellen in dem Hohlraum möglich ist.

Die technischen Merkmale des erfindungsgemäßen Verfahrens weisen dieselben Vorteile wie die entsprechenden Merkmale der erfindungsgemäßen Vorrichtung auf.

Nachfolgend wird die Erfindung anhand bevorzugter Ausführungsformen näher erläutert. Hierbei zeigen:
- Fig. 1: eine schematische Darstellung einer Vorrichtung zur Dämpfung von akustischen Wellen;
- Fig. 2: eine weitere schematische Darstellung einer Ausführungsform einer Vorrichtung zur Dämpfung von akustischen Wellen; und
- Fig. 3: eine schematische Darstellung eines Fantriebwerks mit einer Vorrichtung zum Dämpfen akustischer Wellen im Bereich einer Brennkammer.

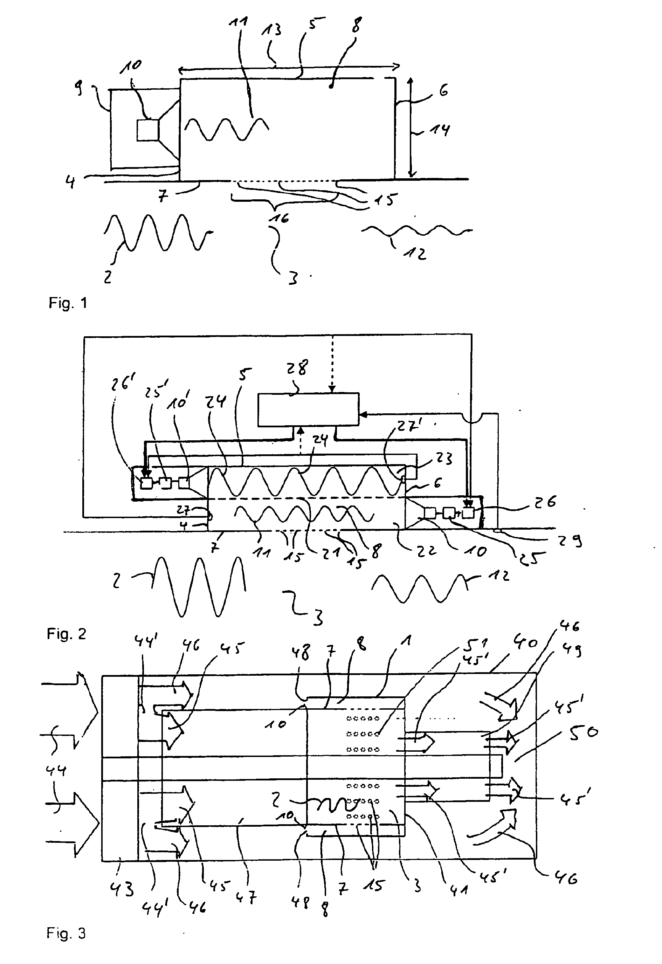

In Fig. 1 ist schematisch eine Vorrichtung 1 zum Dämpfen von akustischen Wellen 2 in einem Volumen 3 dargestellt. Die Vorrichtung 1 umfasst einen von Begrenzungsflächen 4-7 umgebenen Hohlraum 8. Mindestens eine der Begrenzungsflächen 4-7, in dem dargestellten Beispiel die Begrenzungsfläche 7, ist fluiddurchlässig ausgebildet, um einen Fluidaustausch zwischen dem Hohlraum 8 und dem Volumen 3 zu ermöglichen. Die übrigen Begrenzungsflächen 4-6 sind im Wesentlichen schallhart ausgebildet. An dem Hohlraum 8 ist ein Schallerzeuger 9 angeordnet, der ein als Lautsprecher ausgebildetes Schallerzeugungselement 10 umfasst. Dieses Schallerzeugungselement 10 ist an dem Hohlraum 8 so angeordnet, dass in einem in dem Hohlraum 8 befindlichen Fluid aktiv angeregte akustische Wellen 11 aktiv angeregt werden können. Diejenige der Begrenzungsflächen 4-7, an der der Schallerzeuger 9 angeordnet ist, ist entsprechend ausgestaltet. Beispielsweise kann in der entsprechenden Begrenzungsfläche 4 eine Aussparung vorgesehen sein. Ebenso ist es möglich, dass die entsprechende Begrenzungsfläche 4 eine Belochung aufweist. Eine einfallende zu dämpfende Welle 2 in dem Volumen 3, die an der fluiddurchlässigen Begrenzungsfläche 7 entlang verläuft oder auf diese auftrifft, wird über einen Fluidaustausch zwischen dem Volumen 3 und dem Hohlraum 8 gedämpft und wird zu einer gedämpften akustischen Welle 12.

Entscheidend ist, dass eine Frequenz der aktiv angeregten akustischen Welle 11 in dem Hohlraum 8 nicht mit der zu dämpfenden akustischen Welle 2 in dem Volumen 3 übereinstimmen muss. Vielmehr kann eine aktiv angeregte akustische Welle 11 zu dämpfende akustische Wellen 2 in dem Volumen 3 in einem großen Frequenzspektrum dämpfen. Die aktiv angeregte akustische Welle 11 ist frequenzunabhängig und phasenunabhängig von den zu bedämpfenden Wellen 2.

Eine besonders gute Dämpfungswirkung in dem Volumen 3 erhält man, wenn in dem Hohlraum 8 eine Hohlraumresonanz mittels der aktiv angeregten akustischen Wellen 11 angeregt wird. Auch in diesem Fall gilt, dass an die Hohlraumresonanz über den Fluidaustausch nicht nur zu dämpfende akustische Wellen 2 mit einer Frequenz im Bereich der Hohlraumresonanz "ankoppeln" und gedämpft werden, sondern vielmehr zu dämpfende akustische Wellen 2 in einem großen Frequenzspektrum gedämpft werden.

Um auszuschließen, dass eine im Frequenzspektrum dominante Frequenz, d. h. eine Frequenz mit einem besonders hohen Schalldruckpegel angeregt wird, wird der Hohlraum so ausgestaltet, dass in diesem Hohlraumresonanzen anregbar sind, die ein von dieser einen oder mehreren dominanten Frequenzen abweichende Resonanzfrequenz aufweisen. Ebenso wird jeweils bevorzugt eine solche abweichende Resonanzfrequenz angeregt, um sicherzustellen, dass keine Schallenergie in diese bereits dominante Frequenz oder diese dominanten Frequenzen eingekoppelt werden kann.

Der Hohlraum 8 ist vorzugsweise so ausgestaltet, dass eine Ausdehnung 13 entlang der fluiddurchlässigen Begrenzungsfläche 7 größer als eine senkrechte Ausdehnung 14 senkrecht zu dieser fluiddurchlässigen Begrenzungsfläche 7 ist. Es sind jedoch auch andere geometrische Ausgestaltungen des Hohlraums möglich. Die fluiddurchlässige Begrenzungsfläche 7 ist vorzugsweise Grenzfläche des Volumens 3. Bei anderen Ausführungsformen, bei denen die Ausdehnung 13 sehr viel größer als die senkrechte Ausdehnung 14 ist, können eine oder beide Begrenzungsflächen 4, 6 ganz oder teilweise fehlen oder fluiddurchlässig ausgebildet sein.

Die fluiddurchlässige Begrenzungsfläche 7 muss nicht entlang ihrer gesamten Ausdehnung fluiddurchlässig sein. Vielmehr ist es vorteilhaft, dass die fluiddurchlässige Begrenzungsfläche 7 einzelne Öffnungen 15, vorzugsweise in einem Abschnitt 16, entlang der Ausdehnung 13 aufweist, in dem sich ein Druckbauch einer in dem Hohlraum ausbildenden Hohlraumresonanz befindet.

In Fig. 2 ist eine weitere Ausführungsform einer Vorrichtung 1 zum Dämpfen akustischer Wellen 2 in einem Volumen 3 dargestellt. Gleiche technische Merkmale sind mit denselben Bezugzeichen bezeichnet. Bei dieser Ausführungsform ist der Hohlraum 8 durch eine fluiddurchlässige Wand 21 bzw. fluiddurchlässige Begrenzungsfläche in Teilhohlräume 22, 23 unterteilt. Die fluiddurchlässige Wand 21 kann ähnlich oder gleich zu der fluiddurchlässigen Wand 7 ausgebildet sein. Sie kann jedoch ebenfalls mehr oder weniger Öffnungen sowie Öffnungen mit einer anderen Form und Größe sowie an anderen Stellen als die fluiddurchlässige Begrenzungsfläche 7 des Hohlraums 8 aufweisen. Die Vorrichtung ist in jedem Falle so ausgebildet, dass zumindest in einem der Teilhohlräume 22, 23 aktiv angeregte akustische Wellen angeregt bzw. erzeugt werden können. Bei der dargestellten Ausführungsform können sowohl in dem Teilhohlraum 22 aktiv angeregte akustische Wellen 11 als auch in dem Teilhohlraum 23 weitere aktiv angeregte akustische Wellen 24 angeregt bzw. erzeugt werden. Hierfür ist an einer Begrenzungsfläche 6 des Hohlraums 8 ein Schallerzeuger 9 angeordnet. Dieser umfasst als Schallerzeugungselement 10 einen Lautsprecher, der die aktiv angeregten akustischen Wellen 11 in dem Teilvolumen 22 anregen bzw. erzeugen kann. Der Schallerzeuger 9 umfasst hierfür einen Schallgenerator 25. Der Schallgenerator 25 wird vorzugsweise eine elektronische Schaltung sein, die ein beliebiges Schallsignal zum Anregen der aktiv angeregten akustischen Wellen gesteuert erzeugen kann. Die Steuerung des Generators 25 wird mittels einer Steuereinheit 26 bewirkt. In dem Teilhohlraum 22 ist ferner ein Schallsensor 27 angeordnet, der ausgebildet ist, akustische Wellen zu vermessen. Signale des Schallsensors 27 können von der Steuereinheit 26 des Schallerzeugers 9 ausgewertet werden, um den Generator 26 so zu steuern, dass mittels des als Lautsprecher ausgebildeten Schallerzeugungselements 10 jeweils eine Hohlraumresonanz des Teilhohlraums 22 angeregt wird. In gleicher Weise existiert für den Teilhohlraum 23 ein Schallerzeuger 9' mit einem ebenfalls als Lautsprecher ausgebildeten Schallerzeugungselement 10', einem Generator 25' sowie einer Steuereinheit 26'. In dem Teilhohlraum 23 ist ebenfalls ein Schallsensor 27' angeordnet, um die in dem Teilhohlraum 23 weiteren aktiv angeregten akustischen Wellen 24 zu erfassen.

Die Vorrichtung 1 kann ferner eine zentrale Steuereinheit 28 umfassen, die die Schallerzeuger 9 und 9' steuert. Die zentrale Steuereinheit 28 kann Signale eines weiteren Schallsensors 29 auswerten, der in oder an dem Volumen 3 angeordnet ist. Hierüber kann eine Auswertung des Frequenzspektrums der Schallwellen 2 erfolgen. Abhängig von dem Ergebnis der Auswertung kann eine Auswahl der anzuregenden Hohlraumresonanzen gewählt werden. Hierdurch kann sichergestellt werden, dass die Hohlraumresonanzfrequenzen, die angeregt werden, nicht mit einer dominanten Frequenz im Frequenzspektrum der zu dämpfenden Wellen 2 übereinstimmt. Bei anderen Ausführungsformen können zusätzlich oder alternativ die Signale der Schallsensoren 27, 27' zu der Zentralsteuereinheit geführt sein und dort ausgewertet werden, um ein Einhalten der gewählten Hohlraumresonanzen zu prüfen oder zu überwachen. Dieses ist beispielsweise bei einer Erwärmung des Fluids in den Teilhohlräumen 21, 22 oder bei thermischen Ausdehnungen der Teilhohlräume 21, 22, die jeweils beispielsweise in Gasturbinen oder Strahltriebwerken auftreten können, von Vorteil. Die Schallsensoren 27, 27' und der weitere Schallsensor 29 gemeinsam mit der Zentralensteuereinheit werden nicht zum Regeln einer Frequenz oder Phase zeitnah oder angepasst die sich ändernden zu dämpfende Wellen 2 in dem Volumen 3 verwendet. Eine Frequenzkopplung oder gar Phasenkopplung findet nicht statt. Vielmehr erfolgt bevorzugt jeweils eine monofrequente von den zu dämpfenden Wellen 2 phasen- und frequenzunabhängige aktive Anregung von akustischen Wellen in den Teilhohlräumen 21, 22 statt. Die monofrequenten aktiv angeregten akustische Welle 11 oder weitere akustische Welle 24 können die gleiche Frequenz oder unterschiedliche Frequenzen aufweisen. Bei einer solchen Ausführungsform können die Schallerzeuger 9, 9' eine Steuereinheit 26 bzw. 26' aufweisen oder ohne eine solche ausgebildet sein, so dass die Generatoren direkt von der zentralen Steuereinheit 28 angesteuert werden. Bei wieder einer anderen Ausführungsform können die Generatoren in die zentrale Steuereinheit mit integriert sein.

Bei anderen Ausführungsformen können mehr Teilhohlräume des Hohlraums 8 vorgesehen sein. Diese sind jeweils über eine fluiddurchlässige Wand bzw. Begrenzungsfläche voneinander getrennt. Die einzelnen Teilhohlräume können unterschiedliche Abmessungen oder identische Abmessungen aufweisen. Hierbei können sich die Teilhohlräume sowohl hinsichtlich einer senkrechten Ausdehnung 14' als auch ihrer Längsausdehnung 13' sowie einer zu diesen beiden Richtungen senkrechten Querausdehnung (senkrecht zur Zeichnungsebene) voneinander unterscheiden. Bei anderen Ausführungsformen kann der Schallerzeuger bzw. das Schallerzeugungselement auch in dem Hohlraum bzw. Teilhohlraum angeordnet sein. Ebenso ist es möglich, dass mehrere Schallelemente in oder an einem Hohlraum bzw. Teilhohlraum angeordnet sind, um aktiv angeregte akustische Wellen anzuregen bzw. zu erzeugen.

In Fig. 3 ist schematisch ein Fantriebwerk 40 mit einer Vorrichtung 1 zum Dämpfen akustischer Wellen 2 in einer Brennkammer 41 dargestellt. In das Fantriebwerk 40 strömt Fluid 44, in der Regel Luft, entlang einer Hauptströmungsrichtung 42 durch einen Einlass in eine erste Verdichterstufe 43. Nach der ersten Verdichterstufe wird der vorkomprimierte Fluid 44' in einen Hauptstrom 45 und einen Nebenstrom 46 geteilt. Der Hauptstrom 45 gelangt über eine zweite Verdichterstufe 47 in die Brennkammer 41, in der Treibstoff eingespritzt wird, um eine Verbrennungsreaktion zu unterhalten. Hierbei entstehende thermoakustische Resonanzen stellen zu dämpfende akustische Wellen 2 dar. Um die Brennkammer 41 herum ist daher ein in diesem Falle hohlzylindrisch doppelwandig ausgebildete Vorrichtung 1 zum Dämpfen der akustischen Welle 2 angeordnet, die als Liner bezeichnet wird. Der Hohlraum 8 weist mindestens einen Einlass 48 auf, durch den ein Teil des Nebenstroms 46 in den Hohlraum 8 einströmen und durch die Öffnungen 15 der fluiddurchlässigen Begrenzungsfläche 7 des Hohlraums 8 in die Brennkammer 41 ausströmen kann. Diese Strömung ist vorgesehen, um die fluiddurchlässige Begrenzungsfläche 7, die zugleich eine Grenzfläche der Brennkammer 41, d.h. des Volumens 3, ist, in dem die zu dämpfenden akustischen Wellen 2 auftreten, zu kühlen.

Die Öffnungen 15 sind vorzugsweise auf einem oder mehreren Kreisen 51 oder Kreissektoren angeordnet, deren Mittelpunkte auf der Symmetrieachse des Fantriebwerks 40 liegen. Die Anzahl, Größe, Anordnung und Geometrie der Öffnungen 15 auf den Kreisen 51 kann von Kreis zu Kreis 51 variieren. Vorzugsweise sind die Kreise 51 in Abschnitten angeordnet, an denen sich Druckbäuche der aktiv angeregten akustischen Wellen in den Hohlraum ausbilden. Auch eine Wandstärke der fluiddurchlässigen Begrenzungsfläche 7 kann variiert werden.

An dem mindestens einen Einlass 48 ist als Schallerzeugungselement 10 beispielsweise eine Lippe oder Zunge vorgesehen. Diese kann durch den Teil des Nebenstroms zu Schwingungen angeregt werden oder eine Teilung des Nebenstroms bewirken. Hierbei findet eine nicht stationär Ablösung der Strömung statt, wodurch eine aktive Anregung von akustischen Wellen in dem Hohlraum 8 stattfindet. In dem Hohlraum 8 bildet sich eine Hohlraumresonanz aus, die auf den nicht stationären Ablöseprozess rückkoppelt, so dass in dem Hohlraum 8 sich jeweils eine Hohlraumresonanz ausbildet. Dieses passiert unabhängig von Änderungen des Hohlraums aufgrund von Erwärmung und Ausdehnung sowie einer Änderung der Fluideigenschaften aufgrund unterschiedlicher Verdichtung und/oder Temperatur und/oder Drucks usw. Die Vorrichtung 1 sorgt dafür, dass sich in der Brennkammer 41 keine thermoakustischen Resonanzen ausbilden können oder diese zumindest so stark gedämpft werden, dass eine Schädigung des Triebwerks 40 unterbleibt. Der aufgrund des Verbrennungsprozesses stark erwärmte und beschleunigte Hauptstrom 45' des Fluids strömt aus der Brennkammer 41 aus in eine vorzugsweise mehrstufig ausgebildete Turbine 49, die die erste Verdichterstufe 43 und die zweite Verdichterstufe 47 antreibt. Der Haupt- und Nebenstrom 45', 46 werden in einem düsenartig ausgebildeten Auslassbereich 50 vermischt und treten aus dem Triebwerk 40 aus, um einen Schub des Triebwerks 40 zu bewirken.

Es ergibt sich, dass um die Brennkammer 41 mehrere voneinander getrennte Hohlräume 8 ausgebildet sein können, die jeweils nur einen Winkelbereich, d.h. einen Zylindersektor, als fluiddurchlässige Grenzfläche zu dem Volumen 2 aufweisen. Ebenso ist es möglich, dass in axialer Richtung mehrere voneinander getrennte Hohlräume ausgebildet sein können.

Bei Ausführungsformen, bei denen der Hohlraum in Teilhohlräume unterteilt ist, können diese unterschiedliche Teilvolumina aufweisen. Bei einer an eine zylindergeometrisch angepasste Ausführungsform können sich die Teilhohlräume sowohl in axialer Ausdehnung sowie radialer Ausdehnung unterscheiden, um unterschiedliche Hohlraumresonanzen in der Vorrichtung anregen zu können.

Bei einigen Ausführungsformen, einschließlich der beschriebenen Ausführungsformen, können unterschiedliche Schallerzeuger oder Schallerzeugungselemente, die nach unterschiedlichen Prinzipien wirken, für den Hohlraum oder einen Teilhohlraum vorgesehen sein, um in unterschiedlichen Betriebszuständen jeweils optimal aktiv angeregte akustische Wellen erzeugen oder anregen zu können.

### Bezugszeichenliste

- 1: Vorrichtung zum Dämpfen akustischer Wellen
- 2: zu dämpfende akustische Wellen
- 3: Volumen
- 4-6: Begrenzungsflächen
- 7: fluiddurchlässige Begrenzungsfläche
- 8: Hohlraum
- 9: Schallerzeuger
- 10: Schallerzeugungselement
- 11: aktiv angeregte akustische Wellen
- 12: gedämpfte akustische Wellen
- 13, 13': Ausdehnung entlang der fluiddurchlässigen Begrenzungsfläche
- 14, 14': senkrechte Ausdehnung
- 15: Öffnungen
- 16: mittlerer Bereich
- 21: fluiddurchlässige Wand
- 22, 23: Teilhohlräume
- 24: weitere aktiv angeregte akustische Wellen
- 25, 25': Generator
- 26, 26': Steuereinheit
- 27, 27': Schallsensor
- 28: zentrale Steuereinheit
- 29: Schallsensor
- 40: Fantriebwerk
- 41: Brennkammer
- 42: Hauptströmungsrichtung
- 43: erste Verdichterstufe
- 44, 44': vorkomprimierter Fluidstrom
- 45, 45': Hauptstrom
- 46: Nebenstrom
- 47: zweite Verdichterstufe
- 48: Einlass
- 49: Turbine
- 50: Auslassbereich
- 51: Kreise

## Patentansprüche

1. Vorrichtung (1) zur Dämpfung von zu dämpfenden akustischen Wellen (2) in einem in einem Volumen (3) befindlichen Fluid, umfassend einen von Begrenzungsflächen (4-7) umschlossenen Hohlraum (8), wobei mindestens eine der Begrenzungsflächen (4-7) fluiddurchlässig ist, um einen Fluidaustausch mit dem Volumen (3) zu ermöglichen, wobei,
mindestens ein Schallerzeuger (9, 9') in oder an dem Hohlraum (8) angeordnet ist, um in dem in dem Hohlraum (8) befindlichen Fluid aktiv angeregte akustische Wellen (11) aktiv anzuregen, so dass eine Dämpfung der akustischen Wellen (2) in dem Volumen (3) eintritt
**dadurch gekennzeichnet, dass**
der mindestens eine Schallerzeuger (9, 9') ausgebildet ist, die aktiv angeregten akustischen Wellen phasen- und frequenzunabhängig von den zu dämpfenden akustischen Wellen (2) anzuregen.

2. Vorrichtung (1) nach Anspruch 1, **dadurch gekennzeichnet, dass** die fluiddurchlässige Begrenzungsfläche (7) als eine Grenzfläche des Volumens (3) verwendbar ist.

3. Vorrichtung (1) nach Anspruch 1 oder 2, **dadurch gekennzeichnet, dass** der mindestens eine Schallerzeuger (9, 9') ein elektrisch angetriebenes Schallerzeugungselement (10, 10') und zusätzlich oder alternativ ein aerophones Schallerzeugungselement (10) umfasst.

4. Vorrichtung (1) nach einem der Ansprüche 1 bis 3, **dadurch gekennzeichnet, dass** der mindestens eine Schallerzeuger (9, 9') mit einer Steuereinheit (26, 26') verknüpft ist und mit der Steuereinheit (26, 26') mindestens ein Schallsensor (27, 27') zum Erfassen von akustischen Wellen verbunden ist und die Steuereinheit (26, 26', 28) den mindestens einen Schallerzeuger in Abhängigkeit der Messsignale des mindestens einen Schallsensors (27, 27') steuert, um mittels der aktiv angeregten akustischen Wellen (11, 24) eine Hohlraumresonanz anzuregen.

5. Vorrichtung (1) nach einem der Ansprüche 1 bis 4, **dadurch gekennzeichnet, dass** der Schallerzeuger ausgebildet ist, aktiv angeregten akustischen Wellen monofrequent anzuregen.

6. Vorrichtung (1) nach einem der Ansprüche 1 bis 5, **dadurch gekennzeichnet, dass** der Hohlraum (8) mittels mindestens einer weiteren fluiddurchlässigen Wand (21) in mindestens zwei Teilhohlräume (22, 23) unterteilt ist, wobei die aktiv angeregten akustischen Wellen (11, 24) in zumindest einem der zwei Teilhohlräume (22, 23) erzeugt werden.

7. Vorrichtung (1) nach Anspruch 6, **dadurch gekennzeichnet, dass** mindestens ein weiterer Schallerzeuger (9') an oder in einem der mindestens zwei Teilhohlräume (22, 23) angeordnet ist, so dass in den mindestens zwei Teilhohlräumen (22, 23) unterschiedliche aktiv angeregte akustische Wellen (11, 24) erzeugbar sind.

8. Vorrichtung (1) nach einem der Ansprüche 2 bis 7, **dadurch gekennzeichnet, dass** der Hohlraum (8) ausgebildet ist, dass das Volumen (3), das im Wesentlichen rotationssymmetrisch und entlang einer Symmetrieachsenrichtung ausgedehnt ist und in der Symmetrieachsenrichtung von dem Fluid durchströmbar ist, zumindest in einem Rotationswinkel radial mittels der fluiddurchlässigen Begrenzungsfläche (7) begrenzbar ist, wobei der Schallerzeuger (9) in oder an dem Hohlraum am stromaufwärts oder stromabwärts gelegenen Ende des Hohlraums angeordnet ist.

9. Verfahren zum Dämpfen von zu dämpfenden akustischen Wellen (2) in einem Volumen (3) mittels einer Dämpfungsvorrichtung, die einen von Begrenzungsflächen (4-7) umschlossenen Hohlraum (8) umfasst, wobei eine der Begrenzungsflächen (4-7) fluiddurchlässig ist, um einen Fluidaustausch mit dem Volumen (3) zu ermöglichen, wobei
mittels eines Schallerzeugers (9, 9') in dem in dem Hohlraum (8) befindlichen Fluid aktiv angeregte akustische Wellen (11, 24) erzeugt werden, so dass eine Dämpfung der zu dämpfenden akustischen Wellen (2) in dem Volumen (3) eintritt **dadurch gekennzeichnet, dass**
die aktiv angeregten akustischen Wellen phasen- und frequenzunabhängig von den zu dämpfenden akustischen Wellen (2) anregt werden.

10. Verfahren nach Anspruch 9, **dadurch gekennzeichnet, dass** die aktiv angeregten akustischen Wellen (11, 24) mittels eines elektrisch angetriebenen Schallerzeugungselements (10) und alternativ oder zusätzlich mittels eines Fluidstroms über ein aerophones Schallerzeugungselement angeregt werden.

11. Verfahren nach Anspruch 9 oder 10, **dadurch gekennzeichnet, dass** mittels der aktiv angeregten akustischen Wellen (11, 24) eine Hohlraumresonanz in dem Hohlraum (8) angeregt wird.

12. Verfahren nach einem der Ansprüche 9 bis 11, **dadurch gekennzeichnet, dass** mittels mindestens eines Schallsensors (27, 27') die aktiv angeregten akustischen Wellen (11, 24) vermessen werden und die Anregung der aktiv angeregten akustischen Wellen (11, 24) geregelt in Abhängigkeit der Messsignale des mindestens einen Schallsensors (27, 27',) erfolgt, um die Hohlraumresonanz oder eine vorgegebene Frequenz anzuregen und/oder aufrechtzuerhalten.

13. Verfahren nach einem der Ansprüche 9 bis 12, **dadurch gekennzeichnet, dass** der Hohlraum (8) mindestens eine Einlassöffnung (48) umfasst, ein Fluid durch die Einlassöffnung (48) in den Hohlraum (8) eingeleitet, durch den Hohlraum (8) geströmt und durch die fluiddurchlässige Begrenzungsfläche (7) in das Volumen abgeleitet wird.

14. Verfahren nach einem der Ansprüche 9 bis 13, **dadurch gekennzeichnet, dass** eine Nebenströmung (46) an einer stromaufwärtigen Seite des Hohlraums (8) in diesen eintritt und die aktive Anregung der aktiv angeregten akustischen Wellen (11) in dem Hohlraum (8) bewirkt, den Hohlraum (8) durchströmt und durch die fluiddurchlässige Begrenzungsfläche (7) ausströmt, um die fluiddurchlässige Begrenzungsfläche (7) zu kühlen.

15. Verfahren nach einem der Ansprüche 9 bis 14, **dadurch gekennzeichnet, dass** die aktiv angeregten akustischen Wellen monofrequent anregt werden.

## Claims

1. Device (1) for damping acoustic waves (2) to be damped in a fluid situated in a volume (3), comprising a cavity (8) enclosed by delimiting surfaces (4-7), wherein at least one of the delimiting surfaces (4-7) is permeable to fluid in order to make possible a fluid exchange with the volume (3), wherein at least one sound generator (9, 9') is arranged in or on the cavity (8) in order actively to excite acoustic waves (11) actively excited in the fluid in the cavity (8) so that damping of the acoustic waves (2) in the volume (3) occurs, **characterised in that** the at least one sound generator (9, 9') is formed so as to excite the actively excited acoustic waves phase- and frequency-independently of the acoustic waves (2) to be damped.

2. Device (1) according to claim 1, **characterised in that** the fluid-permeable delimiting surface (7) can be used as a border surface of the volume (3).

3. Device (1) according to claim 1 or 2, **characterised in that** the at least one sound generator (9, 9') is an electrically driven sound generating element (10, 10') and additionally or alternatively comprises an aerophonic sound generating element (10).

4. Device (1) according to any one of claims 1 to 3, **characterised in that** the at least one sound generator (9, 9') is linked with a control unit (26, 26') and at least one sound sensor (27, 27') is connected with the control unit (26, 26') to detect acoustic waves, and the control unit (26, 26', 28) controls the at least one sound generator as a function of the measurement signals of the at least one sound sensor (27, 27') in order to excite a cavity resonance by means of the actively excited acoustic waves (11, 24).

5. Device (1) according to any one of claims 1 to 4, **characterised in that** the sound generator is formed to excite actively excited acoustic waves in monofrequency.

6. Device (1) according to any one of claims 1 to 5, **characterised in that** the cavity (8) is divided into at least two part cavities (22, 23) by means of at least one further fluid-permeable wall (21), wherein the actively excited acoustic waves (11, 24) are generated in at least one of the two part cavities (22, 23).

7. Device (1) according to claim 6, **characterised in that** at least one further sound generator (9') is arranged on or in one of the at least two part cavities (22, 23) so that different actively excited acoustic waves (11, 24) can be generated in the at least two part cavities (22, 23).

8. Device (1) according to any one of claims 2 to 7, **characterised in that** the cavity (8) is formed such that the volume (3), which is substantially rotationally symmetrical and extends along an axis of symmetry direction and through which a fluid can flow in the direction of the axis of symmetry, can be delimited radially at least in one rotation angle by means of the fluid-permeable delimitation surface (7), wherein the sound generator (9) is arranged in or on the cavity at the upstream or downstream end thereof.

9. Method for damping acoustic waves (2) to be damped in a volume (3) by means of a damping device, which comprises a cavity (8) enclosed by delimiting surfaces (4-7), wherein one of the delimiting surfaces (4-7) is fluid-permeable in order to allow a fluid exchange with a volume (3), wherein by means of a sound generator (9, 9'), actively excited acoustic waves (11, 24) are generated in the fluid in the cavity (8) so that a damping of the acoustic waves (2) to be damped in the volume (3) occurs, **characterised in that** the actively excited acoustic waves are excited phase- and frequency-independently of the acoustic waves (2) to be damped.

10. Method according to claim 9, **characterised in that** the actively excited acoustic waves (11, 24) are excited by means of an electrically driven sound generating element (10) and alternatively or additionally by means of a fluid flow over an aerophonic sound generating element.

11. Method according to claim 9 or 10, **characterised in that** by means of the actively excited acoustic waves (11, 24), a cavity resonance is excited in the cavity (8).

12. Method according to any one of claims 9 to 11, **characterised in that** by means of at least one sound sensor (27, 27'), the actively excited acoustic waves (11, 24) are measured and the excitation of the actively excited acoustic waves (11, 24) is regulated as a function of the measurement signals of the at least one sound sensor (27, 27') in order to excite and/or maintain the cavity resonance or a pre-specified frequency.

13. Method according to any one of claims 9 to 12, **characterised in that** the cavity (8) comprises at least one inlet opening (48), that a fluid is introduced through the inlet opening (48) into the cavity (8), flows through the cavity (8) and is guided into the volume by the fluid-permeable delimiting surface (7).

14. Method according to any one of claims 9 to 13, **characterised in that** a secondary flow (46) occurs in the cavity (8) on an upstream side thereof and causes the active excitation of the actively excited acoustic waves (11) in the cavity (8), flows through the cavity (8) and emerges through the fluid-permeable delimiting surface (7) in order to cool the fluid-permeable delimiting surface (7).

15. Method according to any one of claims 9 to 14, **characterised in that** the actively excited acoustic waves are excited in monofrequency.

## Revendications

1. Dispositif (1) d'atténuation d'ondes acoustiques (2) à atténuer dans un fluide se trouvant dans un volume (3), comportant une cavité (8) ceinte par des surfaces de limitation (4-7), au moins une des surfaces de limitation (4-7) étant perméable à des fluides afin de permettre un échange de fluide avec le volume (3),
au moins un générateur acoustique (9, 9') étant disposé dans ou contre la cavité (8) afin d'exciter de manière active des ondes acoustiques (11) excitées de manière active dans le fluide se trouvant dans la cavité (8) de sorte qu'une atténuation des ondes acoustiques (2) survienne dans le volume (3),
**caractérisé en ce que**
le ou les générateurs acoustiques (9, 9') sont formés pour exciter les ondes acoustiques excitées de manière active indépendant de la phase et de la fréquence des ondes acoustiques à atténuer (2).

2. Dispositif (1) selon la revendication 1, **caractérisé en ce que** la surface de limitation perméable à des fluides (7) peut servir de surface frontière du volume (3).

3. Dispositif (1) selon la revendication 1 ou 2, **caractérisé en ce que** le ou les générateurs acoustiques (9, 9') comportent un élément générateur acoustique (10, 10') actionné électriquement et en plus ou en variante un élément générateur acoustique aérophone (10).

4. Dispositif (1) selon l'une quelconque des revendications 1 à 3, **caractérisé en ce que** le ou les générateurs acoustiques (9, 9') sont reliés à une unité de commande (26, 26'), **en ce qu'**au moins un capteur acoustique (27, 27') destiné à détecter des ondes acoustiques est relié à l'unité de commande (26, 26') et **en ce que** l'unité de commande (26, 26', 28) commande le ou les générateurs acoustiques en fonction des signaux de mesure du ou des capteurs acoustiques (27, 27') afin d'exciter une résonance de cavité au moyen des ondes acoustiques excitées de manière active (11, 24).

5. Dispositif (1) selon l'une quelconque des revendications 1 à 4, **caractérisé en ce que** le générateur acoustique est conçu pour exciter à une seule fréquence des ondes acoustiques excitées de manière active.

6. Dispositif (1) selon l'une quelconque des revendications 1 à 5, **caractérisé en ce que** la cavité (8) est divisée au moyen d'au moins d'une autre paroi perméable à des fluides (21) en au moins deux cavités partielles (22, 23), les ondes acoustiques excitées de manière active (11, 24) étant générées dans au moins une des deux cavités partielles (22, 23).

7. Dispositif (1) selon la revendication 6, **caractérisé en ce qu'**au moins un autre générateur acoustique (9') est disposé contre ou dans les deux cavités partielles ou plus (22, 23) de sorte que des ondes acoustiques excitées de manière active différentes (11, 24) puissent être générées dans les deux cavités partielles ou plus (22, 23).

8. Dispositif (1) selon l'une quelconque des revendications 2 à 7, **caractérisé en ce que** la cavité (8) est conçue de sorte le volume (3), qui est étendu pratiquement selon une symétrie de rotation et le long d'une direction axiale de symétrie et qui peut être parcouru par le fluide dans la direction axiale de symétrie, puisse être limité de manière radiale au moins dans un angle de rotation au moyen des surfaces de limitation perméables à des fluides (7), le générateur acoustique (9) étant disposé dans ou contre la cavité à l'extrémité de la cavité située en amont ou en aval.

9. Procédé d'atténuation d'ondes acoustiques à atténuer (2) dans un volume (3) au moyen d'un dispositif d'atténuation qui comporte une cavité (8) ceinte par des surfaces de limitation (4-7), une des surfaces de limitation (4-7) étant perméable à des fluides afin de rendre possible un échange de fluides avec le volume (3),
des ondes acoustiques excitées de manière active (11, 24) étant générées au moyen d'un générateur acoustique (9, 9') dans le fluide se trouvant dans la cavité (8) de sorte qu'une atténuation des ondes acoustiques à atténuer (2) survienne dans le volume (3),
**caractérisé en ce que**
les ondes acoustiques excitées de manière active sont excitées indépendant de la phase et de la fréquence des ondes acoustiques à atténuer (2).

10. Procédé selon la revendication 9, **caractérisé en ce que** les ondes acoustiques excitées de manière active (11, 24) sont excitées au moyen d'un élément générateur acoustique (10) actionné électriquement et, en variante ou en plus, au moyen d'un flux de fluide par le biais d'un élément générateur acoustique aérophone.

11. Procédé selon la revendication 9 ou 10, **caractérisé en ce qu'**une résonance de cavité est excitée dans la cavité (8) au moyen des ondes acoustiques excitées de manière active (11, 24).

12. Procédé selon l'une quelconque des revendications 9 à 11, **caractérisé en ce que** les ondes acoustiques excitées de manière active (11, 24) sont mesurées au moyen d'au moins un capteur acoustique (27, 27') et **en ce que** l'excitation des ondes acoustiques excitées de manière active (11, 24) est effectuée avec une régulation dépendante des signaux de mesure du ou des capteurs acoustiques (27, 27') afin d'exciter et/ou maintenir la résonance de cavité ou une fréquence prédéfinie.

13. Procédé selon l'une quelconque des revendications 9 à 12, **caractérisé en ce que** la cavité (8) comporte au moins un orifice d'admission (48), un fluide étant amené dans la cavité (8) par le biais/à travers l'orifice d'admission (48), s'écoulant à travers la cavité (8) et étant détourné par les surfaces de limitation perméables à des fluides (7) dans le volume.

14. Procédé selon l'une quelconque des revendications 9 à 13, **caractérisé en ce qu'**un flux secondaire (46) apparaît dans la cavité (8) sur un côté en amont de celle-ci et provoque l'excitation active des ondes acoustiques excitées de manière active (11) dans la cavité (8), s'écoule à travers la cavité (8) et traverse les surfaces de limitation perméables à des fluides (7) afin de refroidir les surfaces de limitation perméables à des fluides (7).

15. Procédé selon l'une quelconque des revendications 9 à 14, **caractérisé en ce que** les ondes acoustiques excitées de manière active sont excitées à une seule fréquence.
